# EUROPEAN PATENT APPLICATION

(11) **EP 4 346 276 A1**
(43) Date of publication of application: **03.04.2024**
(21) Application number: 22837912.9
(22) Date of filing: 04.07.2022
(51) Int. Cl.: H04W 36/00, H04W 36/18, H04W 36/08

(54) **METHOD AND DEVICE FOR PERFORMING CONDITIONAL DAPS HANDOVER IN MOBILE COMMUNICATION SYSTEM**

(30) Priority: 07.07.2021 KR 20210089069
(71) Applicant: Samsung Electronics Co., Ltd., Suwon-si, Gyeonggi-do 16677 (KR)
(72) Inventor: KIM, Sangbum, Suwon-si Gyeonggi-do 16677 (KR); JIN, Seungri, Suwon-si Gyeonggi-do 16677 (KR); HWANG, June, Suwon-si Gyeonggi-do 16677 (KR)
(74) Representative: Gulde & Partner
(86) International application number: PCT/KR2022/009611
(87) International publication number: WO 2023/282560

(57) **Abstract**

Disclosed are a method and device for performing a conditional DAPS handover in a mobile communication system. The handover method performed by a terminal in a mobile communication system according to an embodiment disclosed herein comprises the steps of: receiving, from a source base station, configuration information for the conditional DAPS handover of the terminal; identifying, on the basis of the configuration information, a target cell that meets the conditions of the DAPS handover; and performing (660) the DAPS handover to the target cell, wherein data transmission or reception between the terminal and the source base station is maintained during the handover procedure in the DAPS handover.

## Description

### [Technical Field]

The disclosure relates a method and a device for a handover in a mobile communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G.

In the initial stage of 5G mobile communication technologies, in order to support services and to satisfy performance requirements in connection with enhanced Mobile BroadBand, (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there is ongoing discussion regarding improvement and performance enhancement of initial 5G mobile communication technologies in view of services to be supported by 5G mobile communication technologies, and there has been physical layer standardization regarding technologies such as V2X for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is impossible, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR, VR, and the like (XR = AR + VR + MR), 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Detailed Description of the Invention]

### [Technical Problem]

The disclosure provides a method and a device for performing a conditional dual active protocol stack (DAPS) handover in a mobile communication system.

In addition, the disclosure provides a method and a device for handover failure recovery in a case where a conditional DAPS handover fails in a mobile communication system.

### [Technical Solution]

A handover method performed by a UE in a mobile communication system according to an embodiment of the disclosure includes receiving, from a source base station, configuration information for a conditional dual active protocol stack (DAPS) handover of the UE, identifying, based on the configuration information, a target cell satisfying a condition of the DAPS handover, and performing (660) the DAPS handover to the target cell, wherein data transmission or reception between the UE and the source base station is maintained during a handover procedure in the DAPS handover.

In addition, a UE in a mobile communication system according to an embodiment of the disclosure includes a transceiver, and a processor configured to receive configuration information for a conditional dual active protocol stack (DAPS) handover of the LTE from a source base station, identify, based on the configuration information, a target cell satisfying a DAPS handover condition, and perform the DAPS handover to the target cell through the transceiver, wherein data transmission or reception between the LTE and the source base station is maintained during a handover procedure in the DAPS handover.

In addition, a handover method performed by a base station in a mobile communication system according to an embodiment of the disclosure includes determining, based on a cell measurement report from a UE, a conditional dual active protocol stack (DAPS) handover for the UE, transmitting a request for the conditional DAPS handover to one or more candidate target cells, receiving information related to the conditional DAPS handover from each of the one or more candidate target cells, transmitting, to the UE, configuration information for each target cell for the conditional DAPS handover, and maintaining communication with the UE during a procedure of the conditional DAPS handover to one of the one or more candidate target cells.

In addition, a base station in a mobile communication system according to an embodiment includes a transceiver, a backhaul communication unit, and a processor configured to determine, based on a cell measurement report from a UE, a conditional dual active protocol stack (DAPS) handover for the UE, transmit a request for the conditional DAPS handover to one or more candidate target cells through the backhaul communication unit, receive information related to the conditional DAPS handover from each of the one or more candidate target cells through the backhaul communication unit, transmit, to the UE through the transceiver, configuration information for each target cell for the conditional DAPS handover, and maintain communication with the UE during a procedure of the conditional DAPS handover to one of the one or more candidate target cells.

### [Brief Description of Drawings]

FIG. 1 illustrates a structure of a mobile communication system according to an embodiment of the disclosure.
FIG. 2 illustrates radio access state transition in a mobile communication system according to an embodiment of the disclosure
FIG. 3 is a flow chart illustrating a first handover procedure in a mobile communication system according to an embodiment of the disclosure.
FIG. 4 is a flow chart illustrating a second handover procedure in a mobile communication system according to an embodiment of the disclosure.
FIG. 5 is a flow chart illustrating a third handover procedure in a mobile communication system according to an embodiment of the disclosure
FIG. 6 is a flow chart illustrating a conditional DAPS handover procedure in a mobile communication system according to an embodiment of the disclosure.
FIG. 7 is a flow chart illustrating an example of a first handover failure recovery (HO failure recovery) operation performed in a UE if a conditional DAPS handover fails in a mobile communication system according to an embodiment of the disclosure.
FIG. 8 is a flow chart illustrating a second HO failure recovery operation performed in a UE if a conditional DAPS handover fails in a mobile communication system according to an embodiment of the disclosure.
FIG. 9 is a flow chart illustrating a base station operation of performing a conditional DAPS HO in a mobile communication system according to an embodiment of the disclosure.
FIG. 10 is a block diagram illustrating a configuration of a UE according to an embodiment of the disclosure.
FIG. 11 is a block diagram illustrating a configuration of a base station according to an embodiment of the disclosure.

### [Mode for Carrying out the Invention]

In describing the disclosure below, a detailed description of known functions or configurations incorporated herein will be omitted when it is determined that the description may make the subject matter of the disclosure unnecessarily unclear. Hereinafter, embodiments of the disclosure will be described in detail in conjunction with the accompanying drawings. For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Furthermore, the "unit" in the embodiments may include one or more processors.

As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "a first" and "a second", or "the first" and "the second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

In the following description, a base station is an entity that allocates resources to user equipments, and may be at least one of a Node B, a base station (BS), an eNode B (eNB), a gNode B (gNB), a wireless access unit, a base station controller, and a node on a network. A user equipment (UE) may be at least one of a terminal, a mobile station (MS), a cellular phone, a smartphone, a computer, or a multimedia system capable of performing communication functions. In addition, the embodiments of the disclosure may be applied to other communication systems having similar technical backgrounds or channel types. Furthermore, based on determinations by those skilled in the art, the embodiments of the disclosure may be applied to other communication systems through some modifications without significantly departing from the scope of the disclosure.

In the following description of the disclosure, terms for identifying access nodes/network entities, terms referring to network entities or network functions (NFs), terms referring to messages, terms referring to interfaces between network entities, terms referring to various identification information, and the like are illustratively used for the sake of descriptive convenience. Therefore, the disclosure is not limited by the terms as used below, and other terms referring to subjects having equivalent technical meanings may be used.

The following detailed description of embodiments of the disclosure is mainly directed to New RAN (NR) as a radio access network and Packet Core as a core network (5G system, 5G Core Network, or new generation core (NG Core)) which are specified in the 5G communication standards defined by the 3rd generation partnership project (3GPP) that is a wireless communication standardization group, but based on determinations by those skilled in the art, the main idea of the disclosure may be applied to other communication systems having similar backgrounds or channel types through some modifications without significantly departing from the scope of the disclosure.

In the following description, some of terms and names defined in the 3GPP standards (e.g., standards for 5G, NR, long term evolution (LTE), or similar systems) may be used for the sake of descriptive convenience. However, the disclosure is not limited by these terms and names, and may be applied in the same way to systems that conform other standards. Furthermore, in the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used below, and other terms referring to subjects having equivalent technical meanings may be used.

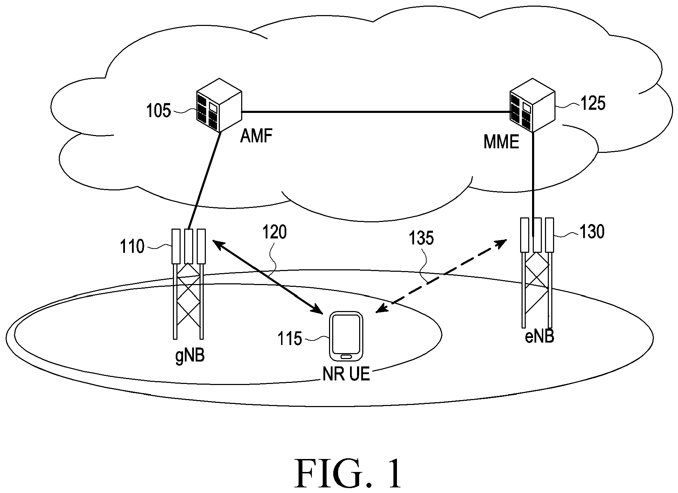

FIG. 1 illustrates a structure of a mobile communication system according to an embodiment of the disclosure.

Referring to FIG. 1, as illustrated, a radio access network of a next-generation mobile communication system (new radio (NR)) may include a next-generation base station (new radio node B, hereafter, referred to as a "gNB") 110, and the mobile communication system may include an access and mobility management function (AMF) 105n for managing the mobility of a UE (new radio user equipment, hereinafter, referred to as an "NR UE" or a "UE") 115. The UE 115 may access an external network through the gNB 110 and the AMF 105.

In FIG. 1, the gNB 110 corresponds to an evolved node B (eNB) 130 of the conventional LTE system. The gNB 110 may be connected to the NR UE 115 through a wireless channel, and provide a service that is much superior to that of the conventional eNB 30 (120). The eNB 130 and the gNB 110 may be called a base station. In the next-generation mobile communication system, all user traffic is serviced through a shared channel, thus a device for collecting status information, such as buffer status, available transmission power status, and channel status of UEs, and performing scheduling is required, and the gNB 110 serves as such a device. One gNB typically controls multiple cells. In order to implement super-high data rates compared to the existing LTE system, the next-generation mobile communication system may have a bandwidth equal to or greater than the maximum bandwidth of the existing system, may employ, as wireless access technology, orthogonal frequency division multiplexing (hereinafter, referred to as "OFDM"), and may further employ a beamforming technique in addition thereto. In addition, an adaptive modulation and coding (hereinafter, referred to as "AMC") scheme is applied to determine a modulation scheme and a channel coding rate in accordance with the channel status of a UE. The AMF 105 performs functions such as mobility support, bearer configuration, and QoS configuration. The AMF 105 is a network entity that performs various control functions, as well as a mobility management function for a LTE 115, and may be connected to multiple base stations. In addition, the next-generation mobile communication system may interwork with the existing LTE system, and the AMF 105 is connected to an MME 125 through a network interface. The MME 125 is connected to the eNB 130, which is a base station in the existing LTE system. The LTE 115 supporting LTE-NR dual connectivity (i.e., EN-DC or NE-DC in the 3GPP standard) may transmit or receive data to or from the gNB 110 and/or the eNB 130 while maintaining connection to not only the gNB 110 but also the eNB 130.

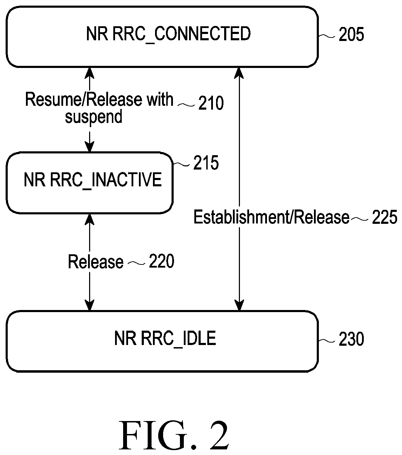

FIG. 2 illustrates radio access state transition in a mobile communication system according to an embodiment of the disclosure.

Referring to FIG. 2, in a next-generation mobile communication system, a UE may have three RRC states including a radio resource control (RRC)-connected state (RRC_CONNECTED) 205, an RRC standby state (RRC_IDLE) 230, and an RRC inactive state (RRC_INACTIVE) 215. The RRC-connected state 205 is a radio access state in which the UE may transmit or receive data. The RRC standby state 230 is a radio access state in which the UE monitors whether paging is transmitted to the UE. The two states of the RRC-connected state 205 and the RRC standby state 230 are radio access states which are also applied to the existing LTE system, and detailed descriptions of the two states are identical to those of the existing LTE system. The next-generation mobile communication system has newly defined a radio access status which is an RRC inactive state (RRC_INACTIVE) 215. In the RRC inactive state 215, UE context is maintained in the base station and the UE, and radio access network (RAN)-based paging is supported. The characteristics of the RRC inactive state 215 are enumerated as follows:
- Cell re-selection mobility;
- CN - NR RAN connection (both C/U-planes) has been established for UE;
- The UE AS context is stored in at least one gNB and the UE;
- Paging is initiated by NR RAN;
- RAN-based notification area is managed by NR RAN; and
- NR RAN knows the RAN-based notification area which the UE belongs to;

In the RRC inactive state 215, the UE may transition to the RRC-connected state 205 or the RRC standby state 230 by using a specific procedure. The UE transitions from the RRC inactive state 215 to the RRC-connected state 205 according to a resume procedure, and the UE transitions from the RRC-connected state to the RRC inactive state by using a release procedure including suspend configuration information (operation 210). In the procedure 210, one or more RRC messages are transmitted or received between the UE and the base station, and the procedure 210 includes one or more stages. In addition, through the release procedure after the resume procedure, the UE may transition from the RRC inactive state 215 to the RRC standby state 230 (operation 220). The transition between the RRC-connected state 205 and the RRC standby state 230 follows the existing LTE technology. That is, through an establishment or release procedure, the transition between the RRC-connected state 205 and the RRC standby state 230 is performed (operation 225).

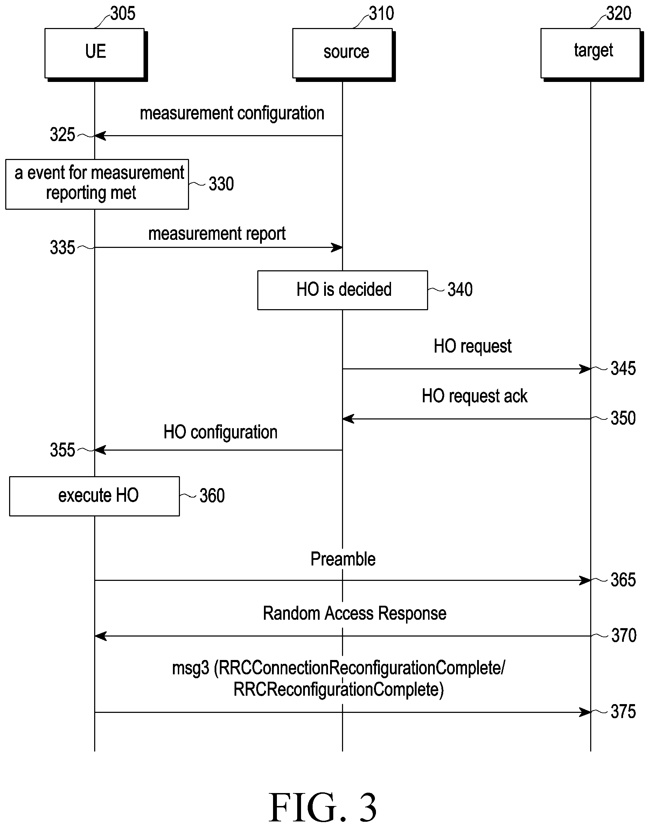

FIG. 3 is a flow chart illustrating a first handover procedure in a mobile communication system according to an embodiment of the disclosure. The first handover procedure shows an example of a normal handover procedure triggered based on cell measurement. Hereinafter, the terms "source cell" and "source base station" the UEs "target cell" and "target base station" in the embodiments of the disclosure may be interchangeably used, and the interchangeably used terms may be also understood to have equivalent meanings.

Referring to FIG. 3, a UE 305 receives an RRC message including measurement configuration information from a source cell 310 (operation 325). The UE 305 applies the measurement configuration information to measure signal qualities of a serving cell and a neighboring cell, and reports (operation 335), to the source cell 310, collected cell measurement information, periodically or when a configured event occurs (operation 330). The source cell 310 determines 340, based on the reported cell measurement information, whether to trigger a first handover. For example, when event A3 (neighbor becomes offset better than special cell (SpCell)) defined in the 3GPP TS 38.331/36.331 standard is satisfied and the cell measurement information is reported, the source cell 310 may determine the first handover. If the source cell 310 determines to trigger the first handover, the source cell 310 requests the first handover through a predetermined inter-node message from one target cell 320 (operation 345). The target cell 320 having received the first handover request accepts the first handover request and transmits, to the source cell 310, handover configuration information required for the first handover (operation 350). The source cell 310 transmits an RRC message including the handover configuration information received from the target cell 320 and additional configuration information to the UE 305 (operation 335). The handover configuration information received by the UE 305 in operation 355 includes, for example, an ID of the target cell 320, frequency information, configuration information (dedicated preamble information, dedicated radio resource information, etc.) required for an operation of random access to the target cell 320, transmission power information, information on a cell radio network temporary identifier (C-RNTI) corresponding to an identifier of the UE, used in the target cell 320, etc.

The UE 305 having received the handover configuration information immediately performs a random access process to the target cell 320, and for example, operates timer T304 corresponding to a handover-related timer defined in the 3GPP TS 38.331/36.331 standard (operation 360). The UE 305 transmits a preamble for random access to the target cell 320 (operation 365). If the UE 305 has failed to receive a dedicated preamble, the UE transmits one of preambles used in contention-based random access. The target cell 320 having received the preamble transmits a random access response message (RAR) to the UE 305 (operation 370). The UE 305 transmits msg3 to the target cell by using uplink allocation information (UL grant information) included in the RAR (operation 375). The msg3 may use an RRCConnectionReconfigurationComplete message in a case of an LTE system and an RRCReconfigurationComplete message in a case of an NR system. If the random access procedure has been successfully completed, the UE 305 considers/determines that the first handover has been successfully completed, and stops timer T304 in operation. If the first handover is not successfully completed until timer T304 expires, the UE 305 considers/determines a handover failure.

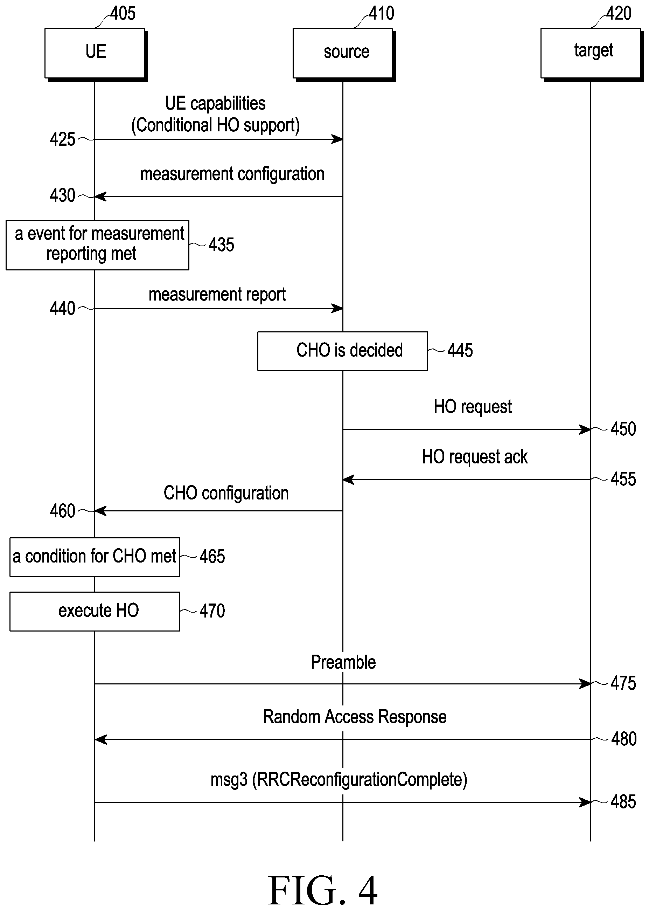

FIG. 4 is a flow chart illustrating a second handover procedure in a mobile communication system according to an embodiment of the disclosure. The second handover illustrates an example of a conditional handover (CHO). In an example of FIG. 4, for convenience of description, one target cell 420 is illustrated, but there may be one or more target cells 420.

Referring to FIG. 4, a UE 405 reports its capability information (UE capability information) to a source cell 410 (operation 425). The capability information includes information indicating whether the UE 405 supports the second handover. The UE 405 receives an RRC message including measurement configuration information from the source cell 410 (operation 430). The UE 405 applies the measurement configuration information to measure signal qualities of a serving cell and a neighbor cell, and the LTE 405 reports (operation 440), to the source cell 410, collected cell measurement report, periodically or when a configured event occurs (operation 435). The source cell 410 determines, based on the reported cell measurement information, whether to trigger a second handover (operation 445). To configure the second handover, the UE 405 needs to be able to support the second handover. If a source cell 410 determines to trigger the second handover, the source cell 410 requests the second handover from one or more target cells 420 through a predetermined inter-node message (operation 450). The target cell 420 having received the second handover request accept the request and transmits handover configuration information required for the second handover operation to the source cell 410 (operation 455). The target cell not having accepted the second handover request are excluded from the second handover. The source cell 410 transmits, to the UE 405, an RRC message including the handover configuration information received from the target cell 420 and additional configuration information (operation 460). The configuration information received by the UE 305 in operation 460 includes an ID of the target cell, frequency information, configuration information (target cell-specific dedicated preamble information, dedicated radio resource information, etc.) required for an operation of random access to the target cell, transmission power information, information on a C-RNTI corresponding to an identifier of a LTE used in each target cell 420, conditions for triggering an operation of random access to each target cell 420, etc. The respective conditions may be different for respective target cells 420, and in addition, multiple conditions may be configured for one target cell.

The UE 405 having received the handover configuration information evaluates whether the target cell 420-specific condition provided from the source cell 410 is satisfied (operation 465). If a condition related to a specific target cell is satisfied, the UE performs a random access process to the corresponding target cell 420, and for example, operates timer T304 corresponding to a handover-related timer defined in the 3GPP TS 38.331/36.331 standard (operation 470). For example, if event A3 (neighbor becomes offset better than SpCell) defined in the 3GPP TS 38.331/36.331 standard is configured and satisfied, the UE 405 transmits the provided preamble to the target cell 420 that is associated (i.e., satisfies a condition) (operation 475). If the UE 405 fails to receive a dedicated preamble, the UE 405 transmits one of preambles used in contention-based random access. The target cell 420 having received the preamble transmits a random access response (RAR) to the UE 405 (operation 480). The UE 405 transmits msg3 to the target cell 420 by using uplink allocation information (UL grant information) included in the RAR (operation 485). The msg3 may use an RRCConnectionReconfigurationComplete message in a case of an LTE system, and an RRCReconfigurationComplete message in a case of an NR system. If the random access procedure is successfully completed, the UE 405 considers/determines that the second handover has been successfully completed, and stops timer T304 in operation. If the second handover is not successfully completed until timer /t304 expires, the UE 405 considers/determines a handover failure.

Although not illustrated in FIG. 4, if the second handover is successfully completed, the UE 405 deletes the handover configuration information received in operation 460. If the source cell 410 receives a report of the handover success from the target cell 420, the source cell deletes UE context information of the UE 405. Whether the handover is successfully performed may be determined through a UE context release message corresponding to an inter-node message transmitted from the target cell 420 to the source cell 410. In addition, the source cell 410 indicates, to another candidate target cell included in the handover configuration information, to delete the handover configuration information (or UE context information) (or informs that the corresponding handover configuration information is no longer valid). The candidate target cell may delete the handover configuration information if a predetermined time interval pass after receiving the handover request, even without indication from the source cell.

Even though a condition related to a specific target cell is satisfied and the UE 405 has performed the handover to the target cell 420 (operation 470), the second handover may not be successfully completed until T304 expires. In this case, although not illustrated in FIG. 4, the UE 405 searches for a suitable cell through a cell selection operation. If there is a suitable cell, it is determined that the found suitable cell is one of the configured target cell candidates. If the found suitable cell is one of the target cell candidates, the UE 405 performs the handover to the suitable cell. This is called an HO failure recovery operation in the disclosure. If the found suitable cell is not one of the target cell candidates, the UE 405 transmits an RRCReestablishmentRequest message to the suitable cell.

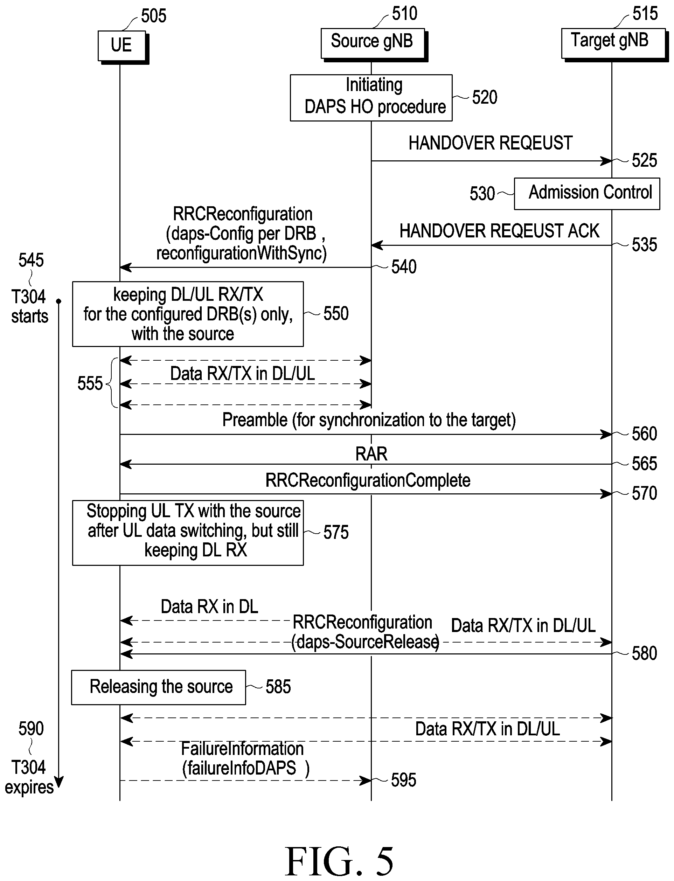

FIG. 5 is a flow chart illustrating a third handover procedure in a mobile communication system according to an embodiment of the disclosure. The third handover indicates an example of a dual active protocol stack (DAPS) handover.

The DAPS handover technology is a technology of maintaining data transmission and reception between a UE and a source base station (cell) during a handover process to minimize a service interruption phenomenon. The UE processes data transmission and reception both with a source base station (cell) and a target base station (cell) during the DAPS handover process, two protocol stacks need to be supported. The DAPS is configured for each data radio bearer (DRB), and when the DAPS is configured for at least one DRB, the DAPS may be applied to a signaling radio bearer (SRB). In the disclosure, the DAPS handover is called a third handover.

Referring to FIG. 5, when a source cell 510 determines to trigger a DAPS handover, the source cell 510 requests a normal handover through a predetermined inter-node message from one target cell 515 (operation 525). The target cell 515 having received the handover request accepts the handover request by using a predetermined admission control (operation 530), and transmits handover configuration information required for the normal handover operation to the source cell 510 (operation 535). The source cell 510 transmits an RRC message including the handover configuration information received from the target cell 515 to the LTE 505 (operation 540). The handover configuration information received by the UE 505 includes an ID of a target cell, frequency information, configuration information (dedicated preamble, information, dedicated radio resource information, etc.) required for a random access operation to the target cell 515, transmission power information, information on a C-RNIT corresponding to an identifier of a LTE used in the target cell, etc. In addition, the handover configuration information may also include DAPS-related configuration information for each DRB.

The UE 505 having received the handover configuration information immediately performs a random access process to the target cell 515, and operates timer T304 described above (operation 545). In this case, the UE 505 keeps performing the data transmission and reception operation with the source cell 510 only for an SRB and a DRB for which the DAPS is configured (operations 550 and 555). The UE 505 transmits a preamble for random access to (for synchronization with) the target cell 515 (operation 560). The target cell 515 having received the preamble transmits a random access response (RAR) to the UE 505 (operation 565). The UE 505 transmits msg3 to the target cell 515 by using UL grant information included in the RAR (operation 570). Here, msg3 may use an RRCReconfigurationComplete message. When the UE 505 receives downlink feedback to the RRCReconfigurationComplete message, the UE considers/determines that the DAPS handover has been successfully completed, and stops timer T304 in operation. In this case, an RRC layer in the UE 505 requests uplink switching from a packet data convergence protocol (PDCP), and from this moment, the uplink data is no longer transmitted from the UE 505 to the source base station 510 (operation 570). However, control information transmitted via uplink by a lower layer of the PDCP layer may be still transmitted from the UE 505 to the source base station 510. In addition, the UE 505 performs a data transmission and reception operation with the target cell 515. The target base station 515 includes, in an RRCReconfiguration message, a daps-SourceRelease field indicating to the UE 505 that a source cell part of the DAPS operation is to be suspended and a source cell part of a DAPS configuration is to be released, and transmits the same to the UE 505 (operation 580), and the UE 505 having received the RRCReconfiguration message suspends data transmission and reception with the source base station 510 (operation 585).

If the DAPS handover has not successfully completed until timer T304 expires (operation 590), the UE 505 considers/determines that the DAPS handover has failed, and determines whether a radio link failure (RLF) has occurred in the source base station 510. When the RLF has not occurred in the source base station 510, the UE 505 does not declare the RLF and continues to perform data transmission and reception in the source base station 510. Instead, the UE 505 indicates to the source base station 510 that the configured DAPS handover with the target base station 510 has failed through a FailureInformation message (operation 595). In the disclosure, it is also called "fallback to source". If the DAPS handover has failed and the RLF has occurred also in the source base station 510, the UE 505 declares the RLF. In this case, the UE 505 performs a re-establishment operation after declaring the RLF. When declaring the RLF, the UE 505 may record useful information that is collectable at the moment, and may report an RLF report when the UE is connected to one cell through the re-establishment operation.

The purposes of introducing the conditional handover (CHO) (i.e., the second handover) and the DAPS handover (i.e., the third handover) are different from each other, and thus the optimal performance can be achieved if the conditional handover and the DAPS handover are combined. The disclosure proposes a method for combining the conditional handover and the DAPS handover and performing the same. Here, the combination may be interpreted in various meanings, and for example, in the disclosure, the combination is described in the perspectives of two scenarios below.

In a first scenario of the disclosure, a source base station (cell) may configure a DAPS handover triggered based on a condition. The LTE having received the handover configuration information evaluates configured conditions, and if a predetermined condition is satisfied, performs a DAPS handover to a target base station (cell) corresponding to the condition. That is, during the handover, a data transmission and reception operation may be performed while maintaining a connection with the source base station (cell). The performed DAPS handover fails, the UE may perform a predetermined HO failure recovery operation. In the disclosure, the type of a handover in the first scenario is called a conditional DAPS handover (conditional DASP HO).

In a second scenario of the disclosure, a source base station (cell) configures, for a UE, the conditional handover described in the example of FIG. 4. The UE having received the handover configuration information evaluates configured conditions, but the conditions may not have been satisfied yet. In this case, the source base station (cell) may configure a DAPS handover for the same UE. The UE having received the configuration of the DAPS handover immediately performs a DAPS handover to a target base station (cell) indicated in the configuration information of the DAPS handover. Even though the UE performs the DAPS handover, the LTE keeps the pre-configured conditional handover configuration information without immediately deleting the same. The conditional handover configuration information may be used to perform a predetermined HO failure recovery operation if the performed DAPS handover fails.

In addition, in the disclosure, if the DAPS handover performed in the first scenario and the second scenario fails, the LTE may perform a predetermined HO failure recovery operation.

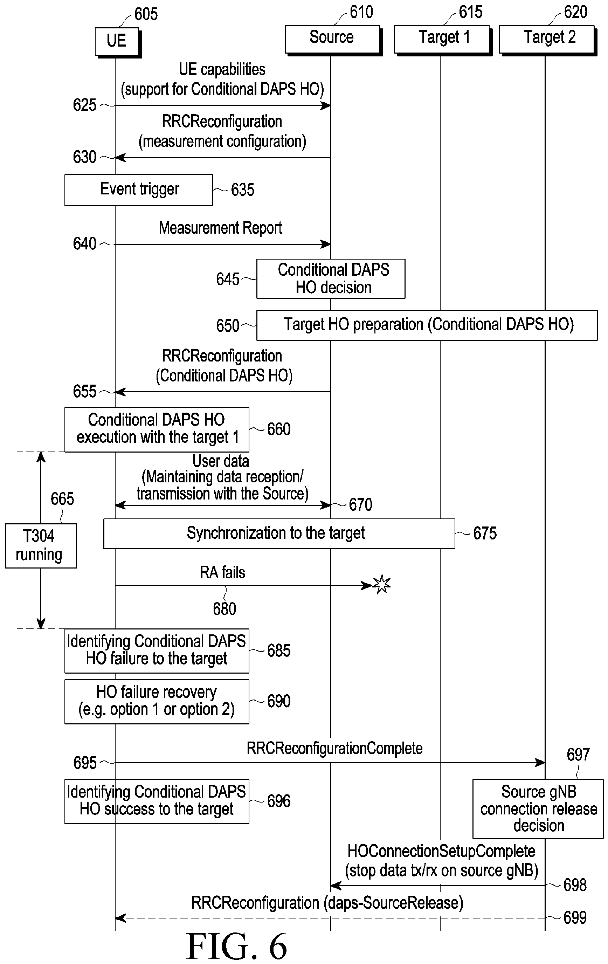

FIG. 6 is a flow chart illustrating a conditional DAPS handover procedure in a mobile communication system according to an embodiment of the disclosure. As described above, in embodiments of the disclosure, each of the terms "source cell" and "source base station and the terms "target cell" and "target base station" may be understood to indicate the same meaning.

In an example of FIG. 6, a mobile communication system supports dual connectivity of a LTE, and base stations of a source base station (cell) and a target cell may be base stations using the same RAT or using different RATs, respectively.

Referring to FIG. 6, a UE 605 reports its capability information to a source base station (operation 605). The capability information may include an indicator indicating that a conditional DAPS handover can be performed (or indicating whether a conditional DAPS handover can be performed). The indicator may be configured for each band combination. That is, there may be a band combination in which the conditional DAPS handover can be performed and a band combination in which the conditional DAPS handover cannot be performed. The source base station 610 may provide cell measurement configuration information to the UE 605 (operation 630). The UE 605 transmits a measurement report (MeasurementReport) message including a cell measurement result to the source base station 610 (operation 640) periodically, or if a predetermined event is satisfied (operation 535). The source base station 610 may determine, based on the reported cell measurement result, whether to configure the conditional DAPS handover for the UE 605 (operation 645). The source base station 610 may request one or more target cell candidates 615 and 620 to perform the conditional DAPS handover (operation 650). The target cells 615 and 620 may provide the source base station 610 with configuration information required for the conditional DAPS handover. For example, each target cell may provide information on configuration of random access performed in its cell, etc. The source base station 610 may determine conditions corresponding to the target cells 615 and 620, respectively. The source base station 610 transmits an RRC message including the conditional DAPS handover configuration information to the UE 650 (operation 655). In the conditional DAPS handover configuration information, a DAPS bearer is indicated for each target cell, and at least one piece of daps-UplinkPowerConfig configuration information (UE transmission power information of the source base station and the target base station during the DAPS handover) may be included for each target cell. In addition, the source base station 610 may simultaneously or selectively configure the conditional handover described in the example of FIG. 4 and the conditional DAPS handover described in the example of FIG. 5. That is, the conditional handover configuration information according to the example of FIG. 4 and the conditional DAPS handover configuration information according to the example of FIG. 5 may be included together in an RRCReconfiguration message transmitted in operation 655, and provided to the UE 605. A method for simultaneously or selectively configuring the conditional handover according to the example of FIG. 4 and the conditional DAPS handover according to the example of FIG. 6 may be described with two examples.

The first method is that the source base station provides the UE with configuration information of one of the conditional handover according to the example of FIG. 4 and the conditional DAPS handover according to the example of FIG. 6 for each target cell. For example, a specific target cell may not be able to support the conditional DAPS handover. Alternatively, a band corresponding to a specific target cell may fail to be included in a band combination in which the LTE 605 can support the conditional DAPS handover. For such a target cell, the conditional handover according to the example of FIG. 4 may be performed.

The second method is that the source base station provides the LTE with both types of configuration information of the conditional handover according to the example of FIG. 4 and the conditional DAPS handover according to the example of FIG. 6 for one target cell. A gain through the DAPS handover occurs when the UE performs data transmission and reception with the source base station during the handover while maintaining a good signal quality. Accordingly, when the source base station configures both the conditional handover according to the example of FIG. 4 and the conditional DAPS handover according to the example of FIG. 6 for one target cell, the source base station may configure different conditions so that the conditional handover according to the example of FIG. 4 or the conditional DAPS handover according to the example of FIG. 6 can be selectively performed. For example, if a condition in which a poor source cell is reflected is satisfied, the UE may perform the conditional handover according to the example of FIG. 4, and if a condition in which a good source cell is reflected is satisfied, the LTE may perform the conditional DAPS handover according to the example of FIG. 6. To provide configuration information in the second method, conditions for the two types of handovers and the corresponding configuration information may be included in one condReconfigId. For example, the structure of ASN.1 defined in the 3GPP standard TS 38.331 V16.x.x for the configuration information may be updated/changed as in <Table 1> below.

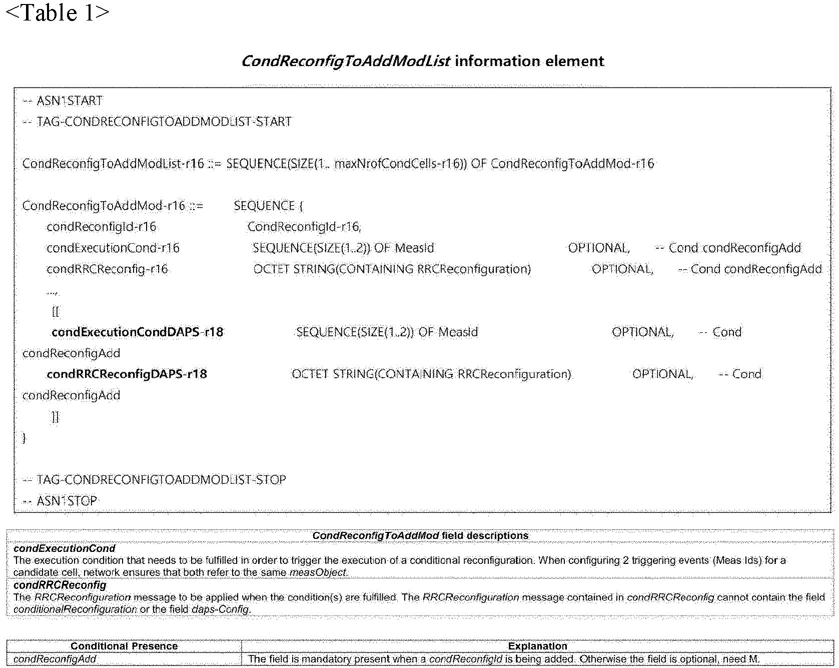

In <Table 1>, a condExecutionCondDAPS-r18 field is used to indicate condition information corresponding to a candidate target cell. In addition, the condRRCReconfigDAPS-r18 field is used to indicate configuration information required when a handover to a candidate target cell is performed.

Alternatively, conditions for the respective handover types and the corresponding configuration information may be included in different condReconfigIds. However, a target cell ID recorded in the corresponding configuration information indicates the same cell.

If all conditions for the conditional handover according to the example of FIG. 4 and the conditional DAPS handover according to the example of FIG. 6 for one target cell are satisfied, the UE performs one selected type of handover. Accordingly, when determining/selecting the handover type, the UE may assign a higher priority to a specific handover type. For example, the conditional DAPS handover may be always selected, the priorities configured by a network may be followed, or one hand type may be selected according to UE implantation. When the network configures the type, the priority information may be included in the handover configuration information.

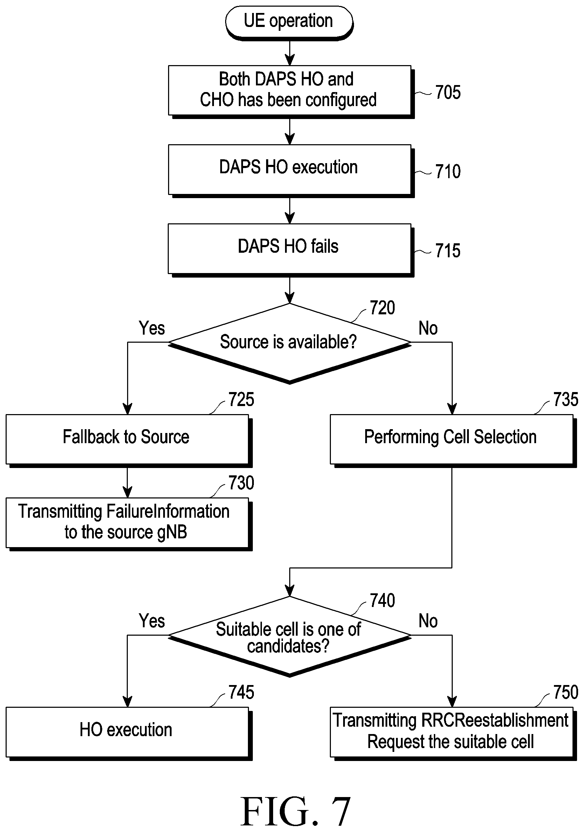

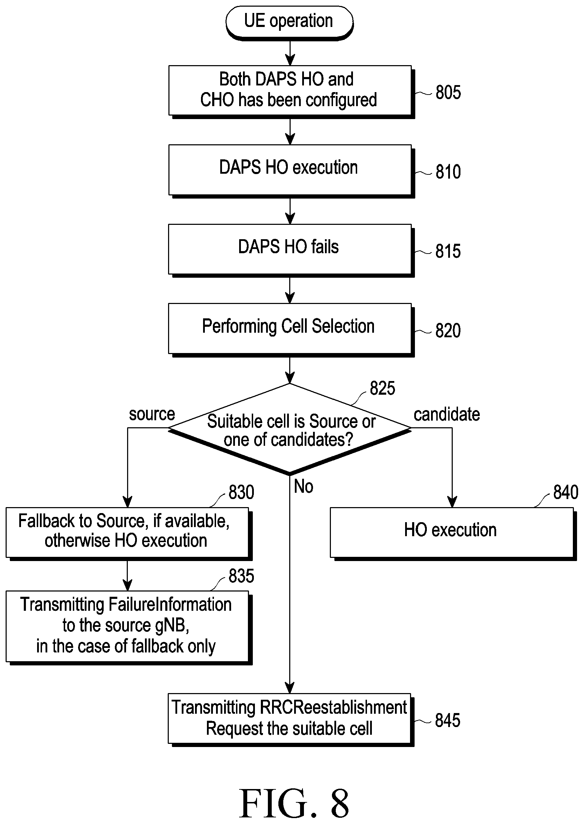

In the example of FIG. 6, if the UE 605 has recognized that a condition corresponding to a first target cell 615 is satisfied, the UE performs a DAPS handover to the first target cell 615 (operation 660). In this case, the UE 605 operates timer T304 (operation 665). The UE 605 maintains the connection with the source base station 610, and performs a data transmission and reception operation (operation 670). In addition, the LTE 605 performs an operation of random access to the first target cell 615 for synchronization (operation 675). The random access to the first target cell 615 may fail (operation 680). If the handover to the first target cell 615 fails to be successfully performed until timer T304 in operation expires, the UE 605 considers that the handover has failed (operation 685), and performs an HO failure recovery operation according to the disclosure (operation 690). The disclosure proposes two HO failure recovery operations (option 1 or option 2) and a detailed operation is described in examples of FIGS. 7 and 8 to be described below.

According to the HO failure recovery operation, the LTE 605 may perform a handover to another target cell candidate, i.e., a second target cell 620. Through an operation of random access to the second target cell 620, the UE 605 transmits an RRCReconfigurationComplete message to the second target cell 620 (operation 695). If the RRCReconfigurationComplete message has been successfully transmitted, the UE 605 considers/determines that the handover to the second target cell 620 has been successfully completed (operation 696). The second target cell 620 having received the RRCReconfigurationComplete message determines to release the connection between the UE 605 and the source base station 610 (operation 697). The second target cell 620 indicates to the source base station 610 to release the connection with the connection 605 (operation 698). In addition, the second target cell 620 transmits, to the UE 605, an RRCReconfiguration message including an indicator (daps-SourceRelease field) indicating releasing of the connection with the source base station 610 (operation 699). The UE 605 having received the RRCReconfiguration message releases the connection with the source base station 610 and deletes related configuration information. Before the UE 605 transmits the RRCReconfigurationComplete message to the second target cell 620 in operation 695, a radio link failure (RLF) may have occurred in the source base station 610. In this case, the UE 605 may include, in the RRCReconfigurationComplete message, an indicator indicating that a radio link failure (RLF) has occurred in the source base station 610. In this case, the second target cell 620 does not need to transmit, to the UE 605, an RRCReconfiguration message including an indicator (daps-SourceRelease field) indicating releasing of the connection with the source base station 610 described in operation 699.

FIG. 7 is a flow chart illustrating an example of a first handover failure recovery (HO failure recovery) operation (option 1) performed in a UE if a conditional DAPS handover fails in a mobile communication system according to an embodiment of the disclosure. In an embodiment of FIG. 6, if a conditional DAPS handover fails, an embodiment of FIG. 7 and the embodiment of FIG. 6 may be combined and performed for HO failure recovery.

The first HO failure recovery operation (option 1) proposed in the embodiment of FIG. 7 first considers performing fallback to a source base station. The UE already performs a data transmission and reception operation with the source base station, and thus the fallback to the source base station can prevents a service interruption phenomenon. The operation is applicable to both the first and second scenarios described above.

Referring to FIG. 7, in operation 705, the UE assumes that the conditional DAPS handover configuration information has been received from the source base station, or the conditional handover has been configured and DAPS handover configuration has been additionally received.

In operation 710, if the UE performs the conditional DAPS handover once the configured condition is satisfied, or if the conditional handover configuration information according to the example of FIG. 4 is stored and information on the DAPS handover is received from the source base station, the UE immediately performs the DAPS handover.

In operation 715, the UE assumes that the DAPS handover has not been successfully completed before timer T304 expires. When T304 timer expires, the UE considers/determines that the DAPS handover has failed. If the conditional DAPS handover fails, the UE configures RLF report content, and the content may include an indicator indicating the conditional DAPS handover failure.

In operation 720, the UE determines whether an RFL has occurred in the source base station or the source base station is available.

In operation 725, if the RLF has not occurred in the source base station or the source base station is available, the UE performs fallback to the source base station. That is, the UE releases Layer 2 configuration in the target cell according to the conditional DAPS handover failure while maintaining data transmission and reception with the source base station. The UE may maintain the conditional DAPS handover configuration information without deleting the same. The Layer 2 configuration may include configuration for a PDCP, a radio link control (RLC), and/or a medium access control (MAC) layer.

In operation 730, the UE transmits a FailureInformation message to the source base station to which the UE has performed fallback. The FailureInformation message may include an indicator indicating that the conditional DAPS handover has failed. The FailureInformation message may also further include at least one of the following information related to the conditional DAPS handover failure.
- An ID of a target cell to which the DAPS handover has been attempted
- Information on a satisfied handover execution condition
- Serving cell and neighbor cell measurement information when the DAPS handover is performed upon satisfaction of the condition
- Information on random access which has been performed in the target cell

The further included information may be utilized when the network optimizes the conditional DAPS handover configuration.

In operation 735, if the RLF has occurred in the source base station or the source base station is not available, the UE performs a cell selection operation and searches for a suitable cell. When starting the cell selection operation, the UE operates a predetermined timer. If the suitable cell cannot be found until the predetermined timer expires, the UE switches to an RRC standby state.

In operation 740, the UE determines whether the selected suitable cell is one of target cell candidates configured based on the configuration information received from the source base station. The target cell candidate may mean all or a part of the target cell candidates indicated in configuration information of not only the conditional DAPS handover and the conditional handover according to the example of FIG. 4. The selected suitable cell may provide the best signal strength quality.

In operation 745, the UE attempts the handover to the suitable cell again if the suitable cell is one of the configured target cell candidates.

In operation 750, the UE transmits an RRCReestablishmentRequest message for RRC re-establishment to the suitable cell if the suitable cell is not one of the configured target cell candidates.

Alternatively, in operation 720, an additional condition other than the condition on whether the RLF has occurred in the source base station may be considered. For example, if the RLF has not occurred in the source base station and the signal strength quality of the source base station has a value equal to or greater than a predetermined threshold value, the UE may determine fallback to the source base station. IF not, the UE may perform a cell selection operation, and in this case, may maintain data transmission and reception if the RLF has not occurred in the source base station. The predetermined threshold value may be provided in advance to the UE by the source base station by using an RRC message, or a pre-defined value may be used. Such an additional condition is provided to prevent fallback to a source base station in which an RLF may occur soon.

FIG. 8 is a flow chart illustrating a second HO failure recovery operation (option 2) performed in a UE if a conditional DAPS handover fails in a mobile communication system according to an embodiment of the disclosure. In an embodiment of FIG. 6, if a conditional DAPS handover fails, an embodiment of FIG. 8 and the embodiment of FIG. 6 may be combined and performed for HO failure recovery.

The second HO failure recovery operation (option 2) proposed in the embodiment of FIG. 8 considers a handover to the most optimal target cell. If the conditional DAPS handover fails, attempting a HO failure recovery to a candidate cell providing the best signal quality can minimize a case where an RLF occurs after the handover. In addition, if the source base station is valid during the HO failure recovery, data transmission and reception with the source base station may be maintained so that a service interruption problem can be suppressed. An operation of this embodiment is applicable to both the first and second scenarios described above.

Referring to FIG. 8, in operation 805, the UE assumes that the conditional DAPS handover configuration information has been received from the source base station, or the conditional handover has been configured and DAPS handover configuration has been additionally received.

In operation 810, if the UE performs the conditional DAPS handover once the configured condition is satisfied, or if the conditional handover configuration information according to the example of FIG. 4 is stored and information on the DAPS handover is received from the source base station, the UE immediately performs the DAPS handover.

In operation 815, the UE assumes that the DAPS handover has not been successfully completed before timer T304 expires. When T304 timer expires, the UE considers/determines that the DAPS handover has failed. If the conditional DAPS handover fails, the UE configures RLF report content, and the content may include an indicator indicating the conditional DAPS handover failure.

In operation 820, the UE performs a cell selection operation and searches for a suitable cell. When starting the cell selection operation, the UE operates a predetermined timer. If the suitable cell cannot be found until the predetermined timer expires, the UE switches to an RRC standby state.

In operation 825, the UE determines whether the selected suitable cell is a cell of the source base station or one of target cell candidates configured based on the configuration information received from the source base station. The target cell candidate may mean all or a part of the target cell candidates indicated in configuration information of not only the conditional DAPS handover and the conditional handover according to the example of FIG. 4. The selected suitable cell may provide the best signal strength quality.

In operation 830, if the elected suitable cell is the source cell of the source base station and the RLF has not occurred in the source cell (the source cell is available), the UE performs fallback to the source base station (cell). If the RLF has occurred in the source base station (cell) (if the source cell has not been available), the source base station (cell) may be switched to an available state later, and in this case, the UE performs a handover or re-establishment operation to the source base station (cell).

In operation 835, the UE transmits a FailureInformation message to the source base station to which the UE has performed fallback. The FailureInformation message may include an indicator indicating that the conditional DAPS handover has failed. The FailureInformation message may also further include at least one of the following information related to the conditional DAPS handover failure.
- An ID of a target cell to which the DAPS handover has been attempted
- Information on a satisfied handover execution condition
- Serving cell and neighbor cell measurement information when the DAPS handover is performed upon satisfaction of the condition
- Information on random access which has been performed in the target cell

The further included information may be utilized when the network optimizes the conditional DAPS handover configuration.

In operation 840, if the suitable cell is one of the configured target cell candidates, the UE attempts the handover to the suitable cell again. In this case, if the source base station (cell) is not selected as the suitable cell but the RLF has not occurred in the source base station (cell), the UE may maintain the data transmission and reception with the source base station during the second HO failure recovery operation. The UE may transmit an RRCReconfigurationComplete message while performing random access to the suitable cell, and may include, in the RRCReconfigurationComplete message, an indicator indicating that the UE is maintaining the data transmission and reception operation with the source cell. If the UE maintains the data transmission and reception operation with the source cell, the UE is to receive, from the target cell through the RRCReconfiguration message, an indicator requesting releasing of communication with the source cell after completion of the handover.

In operation 845, if the suitable cell is not the source cell and is not one of the configured target cell candidates, the UE transmits an RRCReestablishmentRequest message for RRC re-establishment to the suitable cell.

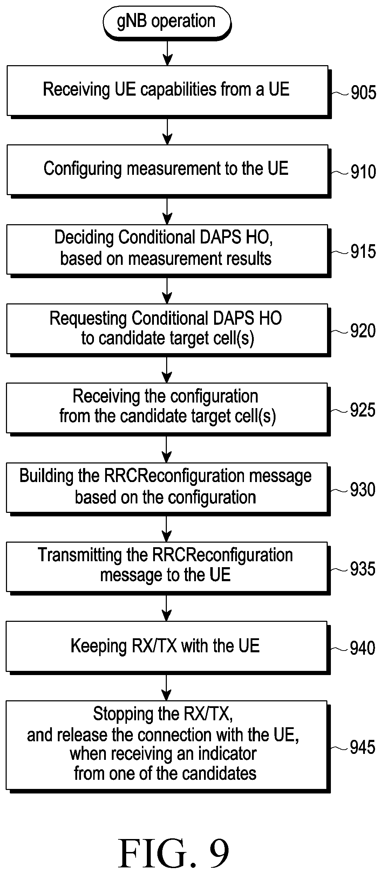

FIG. 9 is a flow chart illustrating a base station operation of performing a conditional DAPS HO in a mobile communication system according to an embodiment of the disclosure. The base station operation corresponds to the operation of the source base station in the embodiment of FIG. 6.

Referring to FIG. 9, in operation 905, the base station receives UE capability information from the UE. The capability information may include an indicator indicating that the conditional DAPS handover can be performed. The indicator may be configured for each band combination. That is, there may be a band combination in which the conditional DAPS handover can be performed and a band combination in which the conditional DAPS handover cannot be performed.

In operation 910, the base station provides cell measurement configuration information to the UE.

In operation 915, the base station determines, based on a cell measurement result reported by the UE, whether the conditional DAPS handover is triggered.

In operation 920, the base station requests the conditional DAPS handover from an adjacent target cell candidate. When the candidate cell of the conditional DAPS handover is determined, the capability information of the UE is also considered.

In operation 925, the base station receives handover configuration information from the target cell candidate.

In operation 930, the base station determines a handover performing condition corresponding to each target cell candidate, and configures an RRCReconfiguration message including the configuration information received from the target cell candidate. In another example, configuration information included in the RRCReconfiguration message may be re-configured based on the configuration information received from the target cell candidate.

In operation 935, the base station transmits the RRCReconfiguration message including the configuration information to the UE.

In operation 940, the base station may perform/maintain a data transmission and reception operation with the UE even after having transmitted the RRCReconfiguration message.

In operation 945, if the base station receives a request for releasing the connection with the LTE from one of the target cell candidates, the base station suspends the data transmission and reception with the UE, and deletes context information for the UE. The target cell having transmitting the request for the releasing of the connection with the UE corresponds to a target cell which has successfully performed the handover with the UE.

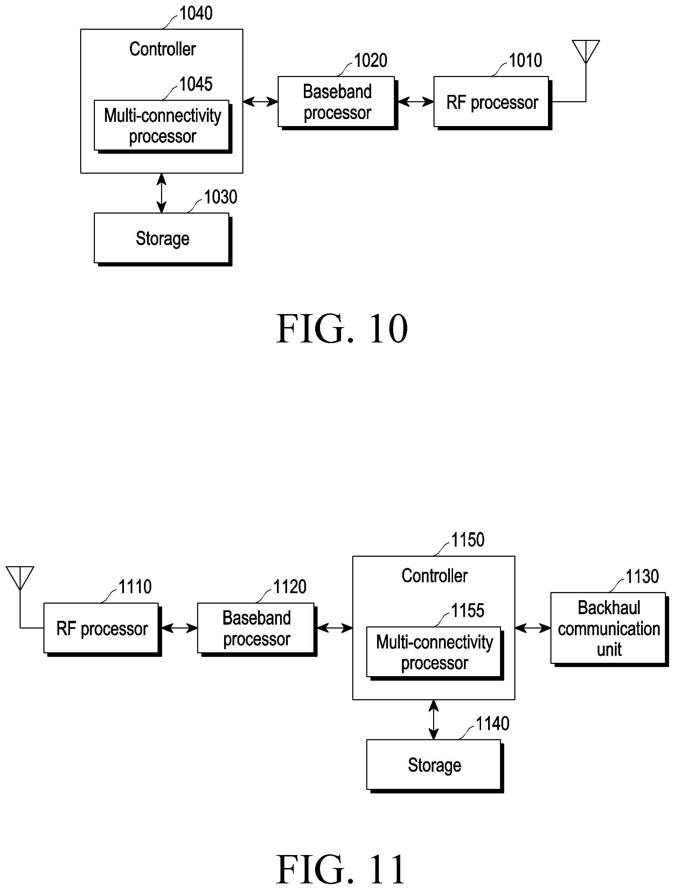

FIG. 10 is a block diagram illustrating a configuration of a UE according to an embodiment of the disclosure.

Referring to FIG. 10, the UE may include a radio frequency (RF) processor 1010, a baseband processor 1020, a storage 1030, and a controller 1040.

The RF processor 1010 performs functions for transmitting/receiving signals through a wireless channel, such as signal band conversion, amplification, and the like. That is, the RF processor 1010 up-converts a baseband signal provided from the baseband processor 1020 into an RF band signal, transmits the same through an antenna, and down-converts an RF band signal received through the antenna into a baseband signal. For example, the RF processor 1010 may include a transmission filter, a reception filter, an amplifier, a mixer, an oscillator, a digital-to-analog converter (DAC), an analog-to-digital converter (ADC), and the like. Although only one antenna is illustrated in FIG. 10, the UE may include multiple antennas. In addition, the RF processor 1010 may include multiple RF chains. Moreover, the RF processor 1010 may perform beamforming. For the beamforming, the RF processor 1010 may adjust the phases and magnitudes of respective signals transmitted/received through multiple antennas or antenna elements. In addition, the RF processor 1010 may perform MIMO and may receive multiple layers when performing an MIMO operation.

The baseband processor 1020 performs a function of conversion between a baseband signal and a bit string according to the physical layer specification of the communication system. For example, during data transmission, the baseband processor 1020 encodes and modulates a transmission bit string, thereby generating complex symbols. In addition, during data reception, the baseband processor 1020 demodulates and decodes a baseband signal provided from the RF processor 1010, thereby restoring a reception bit string. For example, when an orthogonal frequency division multiplexing (OFDM) scheme is followed, during data transmission, the baseband processor 1020 encodes and modulates a transmission bit string so as to generate complex symbols, maps the complex symbols to subcarriers, and then configures OFDM symbols through an inverse fast Fourier transform (IFFT) operation and cyclic prefix (CP) insertion. In addition, during data reception, the baseband processor 1020 divides a baseband signal provided from the RF processor 1010 in units of OFDM symbols, restores signals mapped to subcarriers through a fast Fourier transform (FFT) operation, and then restores the reception bit string through demodulation and decoding.

The baseband processor 1020 and the RF processor 1010 transmit and receive signals as described above. Accordingly, the baseband processor 1020 and the RF processor 1010 may be referred to as a transmitter, a receiver, a transceiver, a communication unit, or a transceiving device. Moreover, at least one of the baseband processor 1020 and the RF processor 1010 may include multiple communication modules in order to support multiple different radio access technologies. In addition, at least one of the baseband processor 1020 and the RF processor 1010 may include different communication modules in order to process signals in different frequency bands. For example, the different radio access technologies may include a wireless RAN (e.g., IEEE 802.11), a cellular network (e.g., LTE), and the like. In addition, the different frequency bands may include a super high frequency (SHF) (for example, 2.NRHz or NRhz) band and a millimeter (mm) wave (for example, 60 GHz) band.

The storage 1030 stores data for operation of the UE, such as a basic program, an application program, and configuration information. The storage 1030 may store information for performing wireless communication by using dual connectivity (DC). In addition, the storage 1030 provides stored data upon a request of the controller 1040.

The controller 1040 controls the overall operations of the UE. For example, the controller 1040 transmits/receives signals through the baseband processor 1020 and the RF processor 1010. In addition, the controller 1040 records and reads data in and from the storage 1030. To this end, the controller 1040 may include at least one processor. For example, the controller 1040 may include a communication processor (CP) that performs control for communication, and an application processor (AP) that controls the upper layer, such as an application program. In addition, the controller 1040 may include a multi-connectivity processor 1045 for processing dual connectivity (DC). The controller 1040 may be at least one processor. The controller 1040 may control the overall device of the UE so that the UE operates according to each of the aforementioned embodiments as well as a combination of at least one embodiment of the disclosure. However, the elements of the UE are not limited to the above examples. For example, the UE may include more or fewer elements compared to the aforementioned elements. For example, the configuration of the UE of FIG. 10 may be implemented to include a processor and a transceiver. In addition, the elements of FIG. 10 may be implemented in the form of at least one chip.

FIG. 11 is a block diagram illustrating a configuration of a base station according to an embodiment of the disclosure.

Referring to FIG. 11, the baes station may include an RF processor 1110, a baseband processor 1120, a backhaul commination unit 1130, a storage 1140, and a controller 1150.

The RF processor 1110 performs functions for transmitting/receiving signals through a wireless channel, such as signal band conversion, amplification, and the like. That is, the RF processor 1110 up-converts a baseband signal provided from the baseband processor 1120 into an RF band signal, transmits the same through an antenna, and down-converts an RF band signal received through the antenna into a baseband signal. For example, the RF processor 1110 may include a transmission filter, a reception filter, an amplifier, a mixer, an oscillator, a DAC, an ADC, and the like. Although only one antenna is illustrated in FIG. 11, the base station may include multiple antennas. In addition, the RF processor 1110 may include multiple RF chains. Moreover, the RF processor 1110 may perform beamforming. For the beamforming, the RF processor 1110 may adjust the phases and magnitudes of signals transmitted/received through multiple antennas or antenna elements. The RF processor may perform a downlink MIMO operation by transmitting at least one layer.

The baseband processor 1120 performs a function of conversion between a baseband signal and a bit string according to the physical layer specification of the communication system. For example, during data transmission, the baseband processor 1120 encodes and modulates a transmission bit string, thereby generating complex symbols. In addition, during data reception, the baseband processor 1120 demodulates and decodes a baseband signal provided from the RF processor 1110, thereby restoring a reception bit string. For example, when an OFDM scheme is followed, during data transmission, the baseband processor 1120 encodes and modulates a transmission bit string so as to generate complex symbols, maps the complex symbols to subcarriers, and then configures OFDM symbols through an IFFT operation and CP insertion. In addition, during data reception, the baseband processor 1120 divides a baseband signal provided from the RF processor 1110 in an OFDM symbol unit, restores signals mapped to subcarriers through a fast Fourier transform (FFT) operation, and then restores the reception bit string through demodulation and decoding. The baseband processor 1120 and the RF processor 1110 transmit and receive signals as described above. Accordingly, the baseband processor 1120 and the RF processor 1110 may be referred to as a transmitter, a receiver, a transceiver, a communication unit, a wireless communication unit, or a transceiving device.

The backhaul communication unit 1130 provides an interface for communicating with other nodes (for example, other base stations) inside the network. That is, the backhaul communication unit 1130 converts a bit string transmitted from the main base station to another node, for example, an auxiliary base station or a core network, into a physical signal, and converts a physical signal received from the other node into a bit string.

The storage 1140 stores data for operation of the base station, such as a basic program, an application program, and configuration information. The storage 1140 may store information on a bearer allocated to a connected UE, a measurement result reported from the connected UE, and the like. In addition, the storage 1140 may store information serving as a criterion to determine whether to provide the LTE with the dual connectivity (DC) or to discontinue the same. In addition, the storage 1140 provides stored data upon a request of the controller 1150.

The controller 1150 controls the overall operations of the base station. For example, the controller 1150 transmits/receives signals through the baseband processor 1120 and the RF processor 1110, or through the backhaul communication unit 1130. In addition, the controller 1150 records and reads data in and from the storage 1140. In addition, the controller 1150 may include a multi-connectivity processor 1155 for processing dual connectivity (DC). The controller 1150 may be at least one processor. The controller 1150 may control the overall device of the base station so that the UE operates according to each of the aforementioned embodiments as well as a combination of at least one embodiment of the disclosure. However, the elements of the UE are not limited to the above examples. For example, the base station may include more or fewer elements compared to the aforementioned elements. For example, the configuration of the base station of FIG. 11 may be implemented by including a processor and a transceiver. In addition, the elements of FIG. 11 may be implemented in the form of at least one chip. In addition, in another example, the base station may be a base station that is mounted in a satellite.

## Claims

1. A handover method performed by a UE in a mobile communication system, the method comprising:
receiving, from a source base station, configuration information for a conditional dual active protocol stack (DAPS) handover of the UE;
identifying, based on the configuration information, a target cell satisfying a condition of the DAPS handover; and
performing the DAPS handover to the target cell,
wherein data transmission or reception between the UE and the source base station is maintained during a handover procedure in the DAPS handover.

2. The method of claim 1, wherein the configuration information for the conditional DAPS handover comprises at least one of information indicating a DAPS bearer for each of one or more candidate target cells for the DAPS handover and power configuration information for each of the one or more candidate target cells.

3. The method of claim 1, further comprising transmitting (625), to the source base station, UE capability information comprising information indicating whether to be capable of performing the conditional DAPS handover.

4. The method of claim 1, comprising:
in case that the DAPS handover to the target cell has failed, identifying whether the source base station is available;
in case that the source base station is available, performing fall back to the source base station;
in case that the source base station is unavailable, performing cell selection; and
in case that a cell selected upon the cell selection is one of one or more candidate target cells for the DAPS handover, performing the DAPS handover to the selected cell.

5. The method of claim 1, comprising:
in case that the DAPS handover to the target cell has failed, performing cell selection;
in case that a cell selected upon the cell selection is a cell of the source base station and the source base station is available, performing fall back to the source base station; and
in case that the cell selected upon the cell selection is one of one or more candidate target cells for the handover, performing the DAPS handover to the selected cell.

6. A UE in a mobile communication system, the LTE comprising:
a transceiver; and
a processor configured to receive configuration information for a conditional dual active protocol stack (DAPS) handover of the UE from a source base station, identify, based on the configuration information, a target cell satisfying a DAPS handover condition, and perform the DAPS handover to the target cell through the transceiver,
wherein data transmission or reception between the LTE and the source base station is maintained during a handover procedure in the DAPS handover.

7. The LTE of claim 6, wherein the configuration information for the conditional DAPS handover comprises at least one of information indicating a DAPS bearer for each of one or more candidate target cells for the DAPS handover and power configuration information for each of the one or more candidate target cells.

8. The UE of claim 6, wherein the processor is further configured to transmit, to the source base station through the transceiver, LTE capability information comprising information indicating whether to be capable of performing the conditional DAPS handover.

9. The UE of claim 6, wherein the processor is further configured to:
in case that the DAPS handover to the target cell has failed, identify whether the source base station is available;
in case that the source base station is available, perform fall back to the source base station;
in case that the source base station is unavailable, perform cell selection; and
in case that a cell selected upon the cell selection is one of one or more candidate target cells for the DAPS handover, perform the DAPS handover to the selected cell.

10. The UE of claim 6, wherein the processor is further configured to:
in case that the DAPS handover to the target cell has failed, perform cell selection;
in case that a cell selected upon the cell selection is a cell of the source base station and the source base station is available, perform fall back to the source base station; and
in case that the cell selected upon the cell selection is one of one or more candidate target cells for the handover, perform the DAPS handover to the selected cell.

11. A handover method performed by a base station in a mobile communication system, the method comprising:
determining, based on a cell measurement report from a UE, a conditional dual active protocol stack (DAPS) handover for the UE;
transmitting a request for the conditional DAPS handover to one or more candidate target cells;
receiving information related to the conditional DAPS handover from each of the one or more candidate target cells;
transmitting, to the UE, configuration information for each target cell for the conditional DAPS handover; and
maintaining communication with the LTE during a procedure of the conditional DAPS handover to one of the one or more candidate target cells.

12. The method of claim 11, wherein the configuration information for each target cell comprises at least one of information indicating a DAPS bearer for each of one or more candidate target cells for the DAPS handover and power configuration information for each of the one or more candidate target cells.

13. The method of claim 11, wherein the determining of the conditional DAPS handover comprises:
receiving, from the UE, UE capability information comprising information indicating whether to be capable of performing the conditional DAPS handover; and
determining, based on the UE capability information and the cell measurement report, the conditional DAPS handover.

14. The method of claim 11, further comprising receiving (730, 835), from the UE having failed to perform the conditional DAPS handover, a message comprising information indicating the failure in the conditional DAPS handover,
wherein the message comprises at least one of an ID of a target cell having attempted performing the conditional DAPS handover, execution condition information of the conditional DAPS handover, serving cell and neighbor cell measurement information of the UE related to the conditional DAPS handover, and random access-related information of the target cell.

15. A base station in a mobile communication system, the base station comprising:
a transceiver;
a backhaul communication unit; and
a processor configured to determine, based on a cell measurement report from a UE, a conditional dual active protocol stack (DAPS) handover for the UE, transmit a request for the conditional DAPS handover to one or more candidate target cells through the backhaul communication unit, receive information related to the conditional DAPS handover from each of the one or more candidate target cells through the backhaul communication unit, transmit, to the UE through the transceiver, configuration information for each target cell for the conditional DAPS handover, and maintain communication with the LTE during a procedure of the conditional DAPS handover to one of the one or more candidate target cells.
